# DEMANDE DE BREVET EUROPEEN

(11) **EP 1 481 754 A1**
(43) Date de publication de la demande: **01.12.2004**
(21) Numéro de dépôt: 04102290.6
(22) Date de dépôt: 25.05.2004
(51) Int. Cl.: B23P 15/02, B21K 3/04, F01D 5/14, F01D 5/18

(54) **Aube creuse de soufflante pour turbomachine et procédé de fabrication d'une telle aube**

(30) Priorité: 27.05.2003 FR 0350187
(71) Demandeur: SNECMA MOTEURS, 75015 Paris (FR)
(72) Inventeur: FRANCHET, Jean-Michel, Patrick, Maurice, 75018, PARIS (FR); LORIEUX, Alain, 95110, SANNOIS (FR); LHOMME, Daniel, Gaston, 95550, BESSANCOURT (FR); LEVEQUE, Stéphane, André, 78230, LE PECQ (FR); DESPREAUX, Jean-Louis, 75018, PARIS (FR)
(74) Mandataire: Poulin, Gérard

(57) **Abrégé**

L'invention concerne un procédé de fabrication d'une aube creuse monobloc de soufflante pour turbomachine comprenant un pied (2) prolongé par une pale (4) dans une direction radiale, le procédé comportant les étapes suivantes :
- réalisation par forgeage d'une aube monobloc de soufflante (1) munie d'une pluralité d'inserts, et
- élimination des inserts afin d'obtenir une pluralité d'évidements (16) dans cette aube.

L'invention se rapporte également à une telle aube (1) pourvue d'une pluralité d'évidements (16) s'étendant chacun sensiblement radialement suivant une ligne centrale courbe (18).

## Description

### DOMAINE TECHNIQUE

La présente invention se rapporte de façon générale au domaine des aubes de soufflante pour turbomachine, et plus particulièrement à celui des aubes creuses de soufflante à grande corde. Par ailleurs, l'invention concerne également les procédés de fabrication de telles aubes.

### ETAT DE LA TECHNIQUE ANTERIEURE

Dans l'art antérieur, les aubes de soufflante à grande corde pour turbomachine sont notamment apparues dans le cadre de la réalisation d'aubes de rotor de soufflante de turboréacteurs à double flux.

En effet, ce type d'aubes s'avère tout à fait adapté pour répondre à des conditions sévères d'utilisation, et intègre en outre des caractéristiques mécaniques satisfaisantes ainsi que de bonnes propriétés antivibratoires et de résistance aux impacts de corps étrangers.

Afin d'obtenir une vitesse importante en bout d'aube, il a alors rapidement été proposé d'opérer une réduction des masses, en présentant notamment des aubes creuses.

A ce titre, la réalisation d'aubes creuses de soufflante pour turbomachine a tout d'abord consisté à utiliser des techniques du type pressage à chaud d'éléments de paroi ou soudage-diffusion de deux demi-aubes, cette technique de soudage-diffusion ayant notamment été associée à celle de formage superplastique.

Cependant, bien que ces techniques connues permettent la réalisation d'aubes creuses de soufflante à grande corde, la mise en oeuvre de celles-ci reste relativement complexe et coûteuse.

Pour pallier cet inconvénient, il a alors été proposé de concevoir une aube creuse de soufflante monobloc, dans laquelle des évidements sont prévus afin de réduire sa masse globale.

Habituellement, le procédé de fabrication d'une telle aube consiste à réaliser une aube monobloc par forgeage, puis à usiner une pluralité de trous afin d'obtenir les évidements souhaités.

Le document US-A-5 407 326 divulgue un tel procédé, dans lequel les évidements sont pratiqués sensiblement transversalement selon l'épaisseur de pale. Une fois ces évidements réalisés, il est nécessaire de les obturer à l'aide de bouchons, afin d'assurer la continuité des surfaces d'extrados et d'intrados de l'aube.

Pour ce faire, les bouchons sont généralement soudés sur l'aube par l'intermédiaire d'un faisceau à haute énergie, ce qui rend le procédé de fabrication long et coûteux, ces inconvénients étant particulièrement accentués en raison du nombre important d'évidements transversaux à prévoir pour assurer une diminution significative de la masse globale de l'aube.

Ainsi, il a alors été proposé de réaliser des évidements s'étendant sensiblement radialement, comme le décrit notamment le document EP-A-0 924 381. Ce type d'évidement est avantageux en ce sens qu'il débouche habituellement au niveau du pied de l'aube, et qu'il ne vient donc pas modifier les surfaces d'extrados et d'intrados de cette aube. Par conséquent, il n'est plus obligatoire d'effectuer le montage d'une multitude de bouchons sur les évidements réalisés, de sorte que le procédé de fabrication est plus optimisé que celui incorporant la mise en oeuvre d'évidements transversaux.

Néanmoins, les opérations d'usinage classiques pour effectuer les trous radiaux ne permettent pas d'obtenir des évidements de longueurs importantes, dans la mesure où les trous usinés s'étendent suivant une ligne droite non-adaptée à la forme incurvée de l'aube. A titre d'exemple illustratif et toujours en référence au document EP-A-0 924 381, les évidements radiaux s'étendent principalement au niveau du pied de l'aube, mais ne se prolongent que très peu dans la partie incurvée de la pale afin d'éviter de déboucher en dehors de celle-ci, et nécessiter ainsi à nouveau l'adjonction de bouchons d'obturation assurant la continuité des surfaces d'extrados et d'intrados.

De ce fait, les évidements radiaux rencontrés ne peuvent être que de faibles longueurs en raison du vrillage important rencontré sur de telles aubes de soufflante, et ne participent par conséquent que de façon peu significative à la réduction de la masse globale de l'aube monobloc.

### EXPOSÉ DE L'INVENTION

L'invention a donc pour but de proposer d'une part un procédé de fabrication d'une aube creuse monobloc de soufflante pour turbomachine, et d'autre part une telle aube creuse monobloc de soufflante pour turbomachine, l'aube et le procédé de fabrication remédiant au moins partiellement aux inconvénients mentionnés ci-dessus relatifs aux réalisations de l'art antérieur.

Pour ce faire, l'invention a donc tout d'abord pour objet un procédé de fabrication d'une aube creuse monobloc de soufflante pour turbomachine comprenant un pied prolongé par une pale dans une direction radiale, le procédé comprenant les étapes suivantes :
- réalisation par forgeage d'une aube monobloc de soufflante munie d'une pluralité d'inserts, et
- élimination des inserts afin d'obtenir une pluralité d'évidements dans cette aube.

Avantageusement, les évidements ne sont plus obtenus par des opérations d'usinage, mais par l'intermédiaire d'une simple étape d'élimination d'inserts agencés dans l'aube, ces inserts ayant été préférentiellement déformés lors de l'étape de réalisation par forgeage de l'aube monobloc.

De cette façon, ces évidements ne s'étendent plus nécessairement selon une ligne droite comme ceux obtenus par des usinages classiques, mais peuvent au contraire s'entendre selon une ligne courbe.

Cette spécificité est particulièrement avantageuse dans le cadre de la réalisation d'évidements radiaux, dans la mesure où ces derniers peuvent alors se prolonger sur une longueur radiale importante sans déboucher au niveau des surfaces d'extrados et d'intrados, en suivant sensiblement le profil de l'aube.

Ainsi, la longueur des évidements radiaux n'est plus conditionnée par la forme incurvée de l'aube de soufflante, et la diminution de masse résultant de la présence de ces évidements peut alors être significative.

Bien entendu, ce procédé de fabrication rapide et peu coûteux pourrait également être mis en oeuvre pour la réalisation d'évidements s'étendant selon toutes directions à travers l'aube, sans sortir du cadre de l'invention.

De préférence, comme indiqué ci-dessus, l'étape de réalisation par forgeage de l'aube monobloc munie d'une pluralité d'inserts est effectuée de sorte que les évidements obtenus, suite à l'étape d'élimination desdits inserts, s'étendent chacun sensiblement radialement suivant une ligne centrale courbe.

A ce titre, il est indiqué qu'une simulation numérique des opérations de forgeage permet facilement de prévoir les positions finales des évidements dans l'aube, ainsi que leurs formes définitives.

Dans un premier mode de réalisation préféré du procédé de fabrication selon l'invention, l'étape de réalisation par forgeage de l'aube monobloc de soufflante munie d'une pluralité d'inserts est effectuée à partir d'un élément d'approvisionnement équipé de la pluralité inserts.

Dans une telle configuration, le procédé est particulièrement simple et rapide à mettre en oeuvre.

Dans un second mode de réalisation préféré du procédé de fabrication selon l'invention, l'étape de réalisation par forgeage de l'aube monobloc de soufflante munie d'une pluralité d'inserts est effectuée par mise en oeuvre des opérations suivantes :
- forgeage préalable d'un élément d'approvisionnement standard,
- mise en place de la pluralité d'inserts dans l'élément d'approvisionnement standard préalablement forgé,
- forgeage de l'élément d'approvisionnement standard préalablement forgé et pourvu de la pluralité d'inserts, afin d'obtenir l'aube monobloc de soufflante munie de la pluralité d'inserts.

Dans les deux modes de réalisation préférés du procédé décrit ci-dessus, on peut prévoir que l'étape d'élimination des inserts est réalisée par dissolution chimique, ces inserts étant préférentiellement réalisés dans un matériau pris parmi le groupe constitué des aciers, des minéraux et des composites. A ce titre, il est naturellement indiqué que la dissolution chimique doit être réalisée de manière à ce que le/les agents utilisés assurent la dissolution du matériau constitutif des inserts, sans attaquer l'aube généralement réalisée en titane ou dans l'un de ses alliages.

Toujours de manière préférentielle, la forme initiale des inserts est indifféremment cylindrique ou non-cylindrique, et de section circulaire ou non-circulaire.

Enfin, de façon connue, le procédé de fabrication est réalisé de telle sorte que l'étape d'élimination des inserts est suivie d'une étape de finition de l'aube.

En outre, l'invention a également pour objet une aube creuse monobloc pour turbomachine comprenant un pied prolongé par une pale dans une direction radiale, cette aube étant pourvue d'une pluralité d'évidements s'étendant chacun sensiblement radialement suivant une ligne centrale, chaque ligne centrale étant une ligne courbe.

Comme mentionné précédemment, l'extension radiale suivant des lignes courbes permet avantageusement aux évidements de présenter une longueur importante, dans la mesure où ils peuvent se prolonger radialement en suivant le profil incurvé de l'aube, sans déboucher sur les surfaces d'extrados et d'intrados.

La diminution de masse résultant de la présence de ces évidements radiaux peut alors être significative, particulièrement lorsque l'aube est conçue de sorte qu'au moins un évidement est réalisé de manière à traverser radialement intégralement cette aube de soufflante.

Naturellement, il est également possible de prévoir qu'au moins un évidement est réalisé de manière à ne traverser radialement que partiellement cette aube, sans sortir du cadre de l'invention.

Enfin, au moins un évidement de l'aube est préférentiellement de section non-constante le long de la ligne courbe.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un premier mode de réalisation préféré de l'aube creuse monobloc de soufflante selon la présente invention,
- les figures 2a à 2c illustrent schématiquement différentes étapes d'un premier mode de réalisation préféré du procédé de fabrication selon la présente invention,
- les figures 3a à 3e illustrent schématiquement différentes étapes d'un second mode de réalisation préféré du procédé de fabrication selon la présente invention,
- la figure 4 représente une vue en perspective d'un second mode de réalisation préféré de l'aube creuse monobloc de soufflante selon la présente invention,
- la figure 5 représente une vue en perspective d'un troisième mode de réalisation préféré de l'aube creuse monobloc de soufflante selon la présente invention, et
- les figures 6 à 8 représentent diverses formes que peuvent prendre les inserts suite à l'étape de réalisation par forgeage de l'aube monobloc de soufflante munie de la pluralité d'inserts, lors de la mise en oeuvre du procédé de fabrication selon la présente invention.

### EXPOSÉ DÉTAILLÉ DE MODES DE RÉALISATION PRÉFÉRÉS

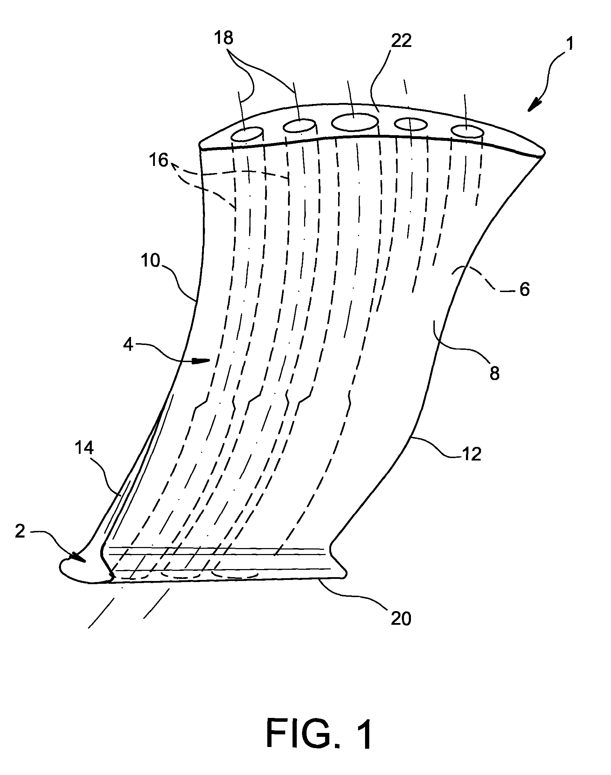

En référence à la figure 1, on peut apercevoir une aube creuse monobloc de soufflante 1 pour turbomachine (non représentée), selon un premier mode de réalisation préféré de la présente invention.

Cette aube creuse monobloc de soufflante 1, du type aube de rotor de soufflante à grande corde, comporte un pied 2 prolongé par une pale 4 dans une direction radiale.

La pale 4, destinée à être placée dans la veine de circulation d'un flux d'air de la turbomachine, est munie de deux surfaces extérieures 6 et 8, respectivement appelées surface d'extrados 6 et surface d'intrados 8, raccordées par un bord d'attaque 10 et un bord de fuite 12. En outre, il est noté que cette dernière peut comporter une partie intermédiaire 14 entre le pied 2 et la pale 4, cette partie 14 étant également appelée « échasse de raccordement ».

Comme on peut l'apercevoir sur la figure 1, l'aube creuse monobloc de soufflante 1, par exemple réalisée dans un alliage de titane, est pourvue d'une pluralité d'évidements 16 s'étendant chacun sensiblement radialement selon une ligne centrale 18 (seuls les trois évidements 16 les plus proches du bord d'attaque 10 sont intégralement représentés). Afin d'assurer une longueur importante de chacun de ces évidements sans que ceux-ci ne débouchent au niveau des surfaces d'extrados et d'intrados 6 et 8, chacune des lignes centrales 18 est une ligne courbe, apte à suivre radialement le profil de l'aube.

Dans ce premier mode de réalisation préféré, chaque évidement 16 s'étend dans l'aube 1 de manière à la traverser radialement intégralement, à savoir en débouchant d'une part au niveau d'une extrémité inférieure 20 du pied 2, et d'autre part au niveau d'une extrémité supérieure 22 de la pale 4.

D'autre part, on peut prévoir qu'au moins un évidement 16 dispose d'une section non-constante le long de sa ligne centrale 18, comme cela est représenté sur la figure 1. En effet, dans ce mode de réalisation préféré, la section des évidements 16 est plus importante au niveau du pied 2 qu'au niveau de la pale 4. Cette possibilité de faire varier la section des évidements 16 permet alors avantageusement d'adapter le volume de matière retirée à l'épaisseur locale de l'aube, toujours de façon à obtenir une réduction maximale de la masse globale de cette aube 1, tout en lui faisant conserver des propriétés mécaniques satisfaisantes. De la même façon, il est possible de prévoir des évidements de sections importantes au niveau de centre de l'aube 1, et des évidements présentant des sections de grandeurs décroissantes au fur et à mesure qu'ils se rapprochent du bord d'attaque 10 et du bord de fuite 12.

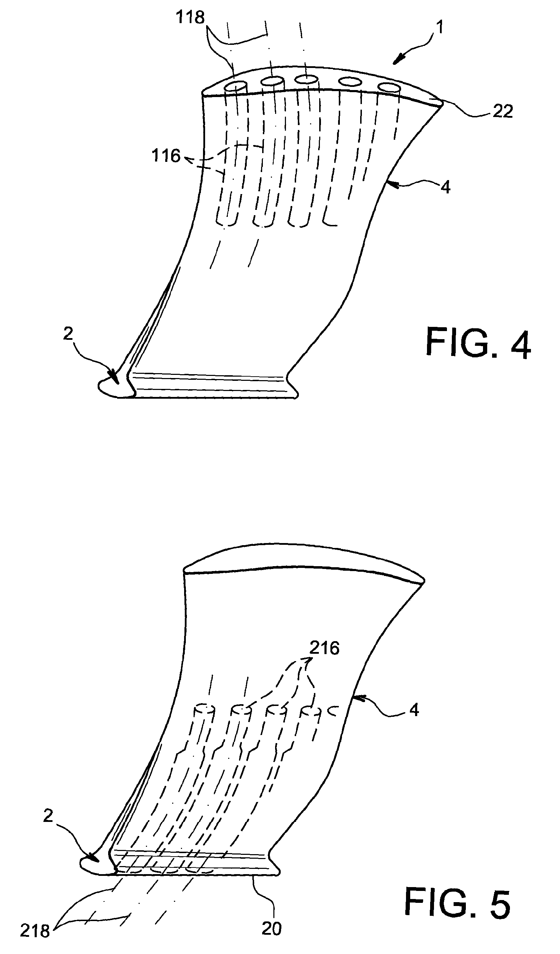

En référence aux figures 4 et 5, on peut apercevoir une aube creuse monobloc de soufflante 1 pour turbomachine, respectivement selon un second mode et selon un troisième mode de réalisation préférés de la présente invention.

Dans ces deux modes de réalisation préférés, des évidements s'étendent toujours radialement dans l'aube creuse monobloc de soufflante 1 selon des lignes centrales courbes, mais de façon à ne traverser que partiellement cette même aube 1.

Comme on peut le voir sur la figure 4, des évidements borgnes 116 s'étendent selon des lignes centrales courbes 118 de façon à déboucher au niveau de l'extrémité supérieure 22 de la pale 4, tout comme les évidements 16 du premier mode de réalisation préféré décrit ci-dessus. Cependant, ces évidements 116 ne se prolongent pas jusqu'au pied 2, mais seulement jusqu'à une portion centrale de l'aube 1, placée sensiblement à mi-hauteur dans la direction radiale de cette dernière.

D'autre part, comme on peut le voir sur la figure 5, des évidements borgnes 216 s'étendent selon des lignes centrales courbes 218 de façon à déboucher au niveau de l'extrémité inférieure 20 du pied 2, tout comme les évidements 16 du premier mode de réalisation préféré décrit ci-dessus. Cependant, ces évidements 216 ne se prolongent pas jusqu'à l'extrémité supérieure 22 de la pale 4, mais seulement jusqu'à une portion centrale de l'aube 1, placée sensiblement à mi-hauteur dans la direction radiale de cette dernière.

Bien entendu, il est également possible de prévoir une aube creuse monobloc 1 incorporant des évidements de conceptions différentes telles que celles exposées dans la description des premier, second et troisième modes de réalisation préférés, sans sortir du cadre de l'invention. A ce titre, il est indiqué que les caractéristiques mécaniques recherchées pour l'aube 1 conditionnent le nombre de ces évidements, ainsi que leurs sections et leurs longueurs.

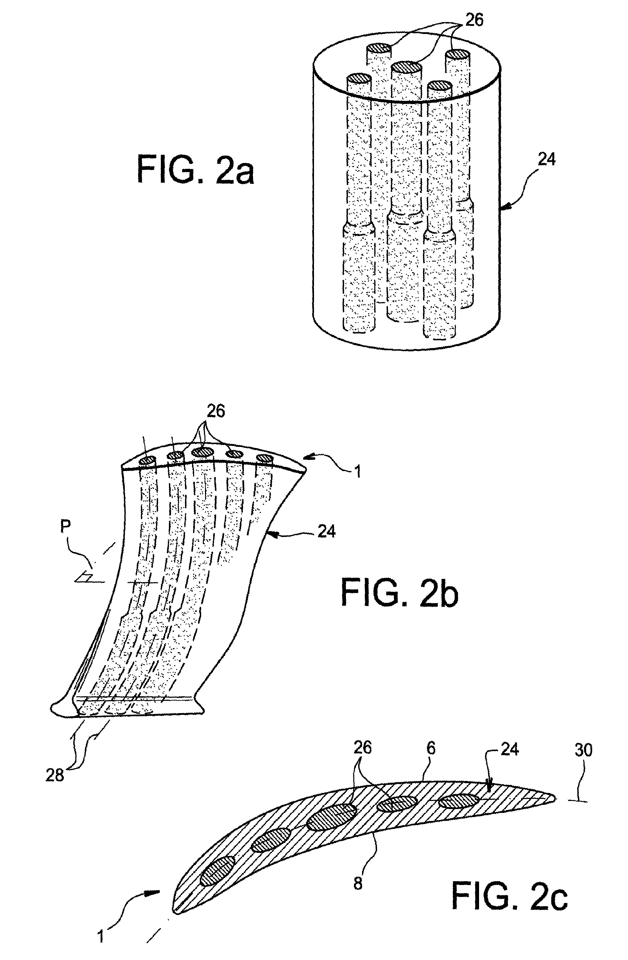

En référence aux figures 2a à 2c, il est représenté schématiquement différentes étapes d'un premier mode de réalisation préféré du procédé de fabrication selon la présente invention.

La figure 2a illustre un élément d'approvisionnement 24 équipé d'une pluralité d'inserts 26, cet élément d'approvisionnement 24 étant destiné à subir une étape de forgeage consistant en une ou plusieurs opérations successives, afin qu'il présente une forme d'aube.

Les inserts 26 intégrés à l'élément d'approvisionnement 24, indifféremment de forme initiale cylindrique ou non-cylindrique et de section circulaire ou non-circulaire, sont par exemple réalisés à l'aide d'aciers, de composites ou de minéraux, tandis que l'élément d'approvisionnement 24 est préférentiellement réalisé dans un alliage de titane.

Après avoir subit cette étape de forgeage mise en oeuvre selon des techniques connues, l'élément d'approvisionnement 24 présente alors la forme d'une aube 1 telle que représentée sur la figure 2b, munie des inserts 26 disposés aux mêmes emplacements que ceux désirés pour les évidements de cette aube. En se référant à cette figure 2b, on voit que les inserts 26, qui se présentaient chacun initialement sous la forme de deux portions cylindriques superposées coaxiales et de sections circulaires (figure 2a), ont également été déformés durant l'étape de forgeage. En effet, après cette étape, les inserts 26 s'étendent radialement selon des lignes centrales courbes 28, toujours de façon à présenter deux portions distinctes superposées radialement.

Naturellement, une simulation numérique des opérations de forgeage permet facilement de prévoir les positions finales des inserts 26 dans l'élément d'approvisionnement 24 ainsi que les formes définitives de ces mêmes inserts, en fonction d'une configuration spécifique initiale de l'élément d'approvisionnement 24 équipé des inserts 26.

Dans ce mode de réalisation préféré, comme représenté sur la figure 2c correspondant à une coupe transversale de la figure 2b selon un plan P, l'étape de forgeage conduit les inserts 26 à être agencés le long d'une corde 30 de l'aube 1, et à présenter une section sensiblement ovale dont les deux extrémités aplaties sont centrées sur cette même corde 30.

Bien entendu, comme mentionné précédemment, la section finale des inserts 26 peut varier selon les modes de déformations utilisés, la disposition initiale des inserts 26 dans l'élément d'approvisionnement 24, ainsi que selon les formes initiales des ces inserts 26 et de l'élément d'approvisionnement 24.

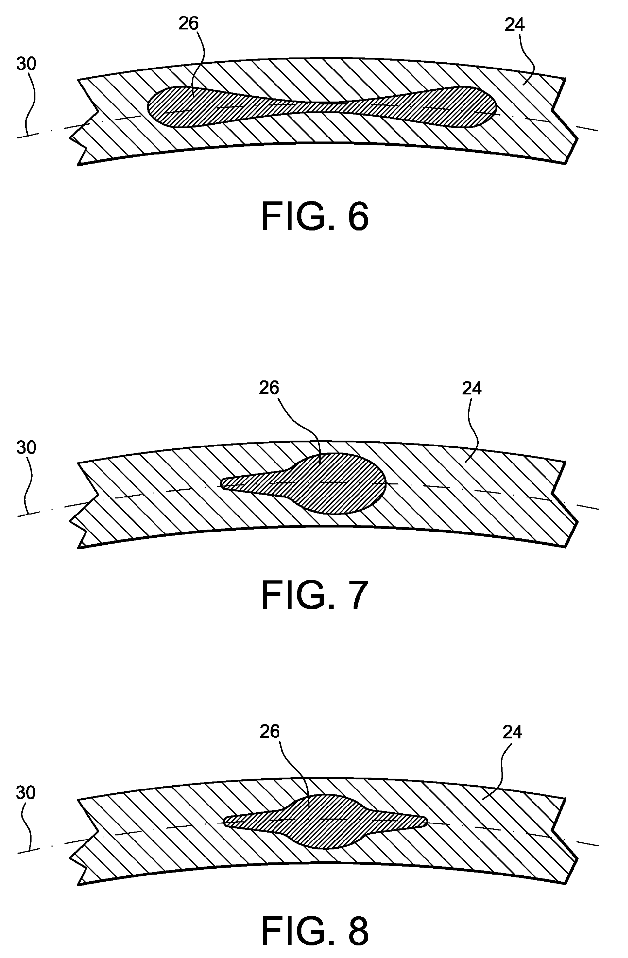

A titre d'exemples illustratifs, les figures 6 à 8 représentent diverses formes, autres que celle sensiblement ovale, que peuvent prendre les inserts 26 disposant initialement de portions cylindriques de sections circulaires, suite à l'étape de forgeage de l'élément d'approvisionnement 24.

La figure 6 montre un insert 26 équipant un élément d'approvisionnement 24 ayant subit une déformation très importante lors de l'étape de forgeage. La section de cet insert 26 présente alors la forme d'une bande s'étendant sensiblement selon la corde 30 de l'aube 1, et dont la partie centrale est légèrement moins épaisse que les deux parties d'extrémité.

Les figures 7 et 8 montrent des inserts 26 équipant un élément d'approvisionnement 24 ayant subit une déformation peu importante lors de l'étape de forgeage. Les sections de ces inserts 26, de formes générales ovales similaires à celle représentée sur la figure 2c, sont telles que respectivement l'une ou les deux extrémités aplaties sont sensiblement et progressivement effilées le long de la corde 30 de l'aube 1.

Une fois cette étape réalisée, il est ensuite procédé à une étape d'élimination des inserts 26, afin que ceux-ci laissent place à des évidements de mêmes formes.

Cette étape est de préférence effectuée en réalisant une dissolution chimique des inserts 26, par exemple en plongeant l'aube 1 munie de ces inserts 26 dans un bain d'agents appropriés, n'engendrant pas la détérioration de l'aube.

Ainsi, il est obtenu une aube creuse monobloc de soufflante 1 telle que celle représentée sur la figure 1, dont les évidements 16 s'étendent alors selon des lignes centrales courbes 18 identiques aux lignes centrales courbes 28 selon lesquelles s'étendaient les inserts 26 à travers l'élément d'approvisionnement 24, avant que ceux-ci n'aient été éliminés.

Enfin, cette étape peut alors être suivie d'une étape classique de finition de l'aube 1, destinée à lui donner rigoureusement le profil aérodynamique souhaité.

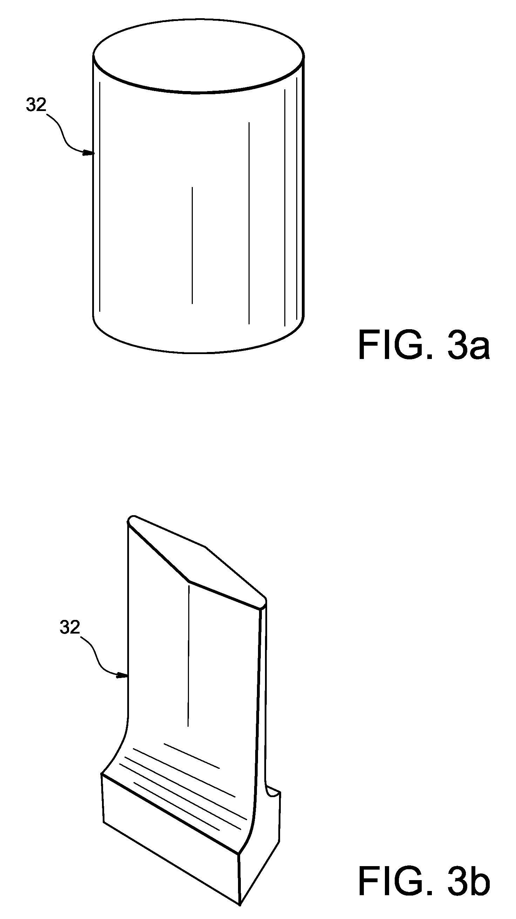

En référence aux figures 3a à 3e, il est représenté schématiquement différentes étapes d'un second mode de réalisation préféré du procédé de fabrication selon la présente invention.

Dans ce mode de réalisation préféré, seule la première étape de réalisation par forgeage d'une aube monobloc de soufflante munie d'une pluralité d'inserts diffère par rapport au procédé décrit dans le mode de réalisation préféré précédent.

En effet, il est tout d'abord procédé à la mise en oeuvre d'une opération forgeage préalable d'un élément d'approvisionnement standard 32, tel que celui représenté sur la figure 3a.

Cet élément d'approvisionnement standard 32 est de préférence réalisé dans un alliage de titane, et présente une forme sensiblement cylindrique de section circulaire.

L'opération préalable de forgeage peut alors consister en une ou plusieurs opérations successives de forgeage, de préférence une seule, dont le but est d'obtenir un élément d'approvisionnement 32 préalablement forgé, telle qu'une ébauche disposant d'une forme approximative d'aube comme le montre la figure 3b.

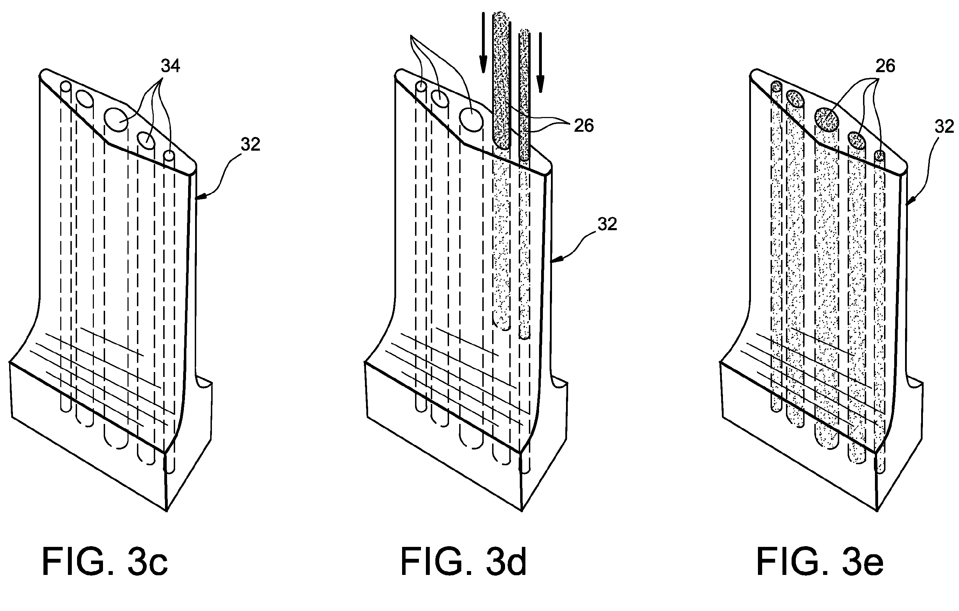

Ensuite, sur cet élément d'approvisionnement 32 préalablement forgé, il est pratiqué une pluralité de trous 34 destinés à recevoir les inserts 26, comme on peut le voir sur la figure 3c. A ce titre, il est précisé que la réalisation de ces trous 34 s'effectue à l'aide de techniques classiques telles que celle d'usinage. D'autre part, il est bien entendu que les caractéristiques mécaniques recherchées pour l'aube 1 définissent le nombre de trous 34 à prévoir, ainsi que leurs sections et leurs longueurs. A titre d'exemple illustratif, les trous 34 pratiqués sont cylindriques et de sections constantes. De plus, les sections des trous 34 peuvent être de grandeurs importantes pour ceux qui se situent à proximité du centre de l'ébauche, et de grandeurs décroissantes au fur et à mesure que ces trous 34 se rapprochent des bords de cette ébauche, comme l'illustre clairement la figure 3c. Naturellement, le critère de faisabilité des trous 34 dans l'ébauche intervient également dans la détermination des dimensions maximales pouvant être pratiquées pour ces trous 34.

Une fois les trous 34 réalisés dans une direction sensiblement radiale de l'ébauche, les inserts 26 de formes complémentaires, donc également cylindriques et de sections circulaires, sont effectivement placés à l'intérieur de ces derniers, comme l'illustrent les figures 3d et 3e.

Ainsi, il peut alors être procédé à une opération de forgeage de l'élément d'approvisionnement standard 32 préalablement forgé et pourvu de la pluralité d'inserts 26, afin d'obtenir une aube monobloc munie de la pluralité d'inserts 26. L'aube obtenue est de cette façon similaire à celle représentée sur la figure 2b, à la différence que les inserts déformés 26 présentent chacun une section sensiblement constante le long de sa ligne courbe 28 associée, en raison de la forme initiale cylindrique de ces inserts 26.

De la même façon que dans le mode de réalisation préféré précédent, la section finale des inserts 26 peut varier selon les modes de déformations utilisés, la disposition des inserts 26 dans l'élément d'approvisionnement 32 préalablement forgé, ainsi que selon les formes initiales des ces inserts 26 et de l'élément d'approvisionnement 32 préalablement forgé.

Par la suite, les étapes d'élimination et de finition sont sensiblement identiques à celles décrites dans le premier mode de réalisation préféré du procédé selon l'invention.

Bien entendu, diverses modifications peuvent être apportées par l'homme du métier au procédé de fabrication et à l'aube creuse monobloc 1 qui viennent d'être décrits, uniquement à titre d'exemples non limitatifs.

## Revendications

1. Procédé de fabrication d'une aube creuse monobloc de soufflante pour turbomachine comprenant un pied (2) prolongé par une pale (4) dans une direction radiale, **caractérisé en ce qu'**il comprend les étapes suivantes :
- réalisation par forgeage d'une aube monobloc de soufflante (1) munie d'une pluralité d'inserts (26), et
- élimination des inserts (26) afin d'obtenir une pluralité d'évidements (16,116,216) dans ladite aube (1).

2. Procédé de fabrication selon la revendication 1, **caractérisé en ce que** l'étape de réalisation par forgeage de l'aube monobloc (1) munie d'une pluralité d'inserts (26) est effectuée de sorte que les évidements (16,116,216) obtenus, suite à l'étape d'élimination desdits inserts (26), s'étendent chacun sensiblement radialement suivant une ligne centrale courbe (18,118,218).

3. Procédé de fabrication selon la revendication 1 ou la revendication 2, **caractérisé en ce que** l'étape de réalisation par forgeage de l'aube monobloc de soufflante (1) munie d'une pluralité d'inserts (26) est effectuée à partir d'un élément d'approvisionnement (24) équipé de ladite pluralité inserts (26).

4. Procédé de fabrication selon la revendication 1 ou la revendication 2, **caractérisé en ce que** l'étape de réalisation par forgeage de l'aube monobloc de soufflante (1) munie d'une pluralité d'inserts (26) est effectuée par mise en oeuvre des opérations suivantes :
- forgeage préalable d'un élément d'approvisionnement standard (32),
- mise en place de ladite pluralité d'inserts (26) dans l'élément d'approvisionnement standard (32) préalablement forgé,
- forgeage de l'élément d'approvisionnement standard (32) préalablement forgé et pourvu de ladite pluralité d'inserts (26), afin d'obtenir ladite aube monobloc de soufflante (1) munie de la pluralité d'inserts (26).

5. Procédé de fabrication selon l'une quelconque des revendications précédentes, **caractérisé en ce que** l'étape d'élimination desdits inserts (26) est réalisée par dissolution chimique de ces inserts (26) .

6. Procédé de fabrication selon l'une quelconque des revendications précédentes, **caractérisé en ce que** chaque insert (26) est réalisé dans un matériau pris parmi le groupe constitué des aciers, des minéraux et des composites.

7. Procédé de fabrication selon l'une quelconque des revendications précédentes, **caractérisé en ce que** la forme initiale desdits inserts (26) est indifféremment cylindrique ou non-cylindrique.

8. Procédé de fabrication selon l'une quelconque des revendications précédentes, **caractérisé en ce que** l'étape d'élimination desdits inserts (26) est suivie d'une étape de finition de ladite aube (1).

9. Aube creuse monobloc de soufflante (1) pour turbomachine comprenant un pied (2) prolongé par une pale (4) dans une direction radiale, ladite aube (1) étant pourvue d'une pluralité d'évidements (16,116,216) s'étendant chacun sensiblement radialement suivant une ligne centrale (18,118,218), **caractérisée en ce que** chaque ligne centrale (18,118,218) est une ligne courbe.

10. Aube (1) selon la revendication 9, **caractérisée en ce qu'**au moins un évidement (16) est réalisé de manière à traverser radialement intégralement ladite aube (1).

11. Aube (1) selon la revendication 9 ou la revendication 10, **caractérisée en ce qu'**au moins un évidement (116,216) est réalisé de manière à ne traverser radialement que partiellement ladite aube (1).

12. Aube (1) selon l'une quelconque des revendications 9 à 11, **caractérisée en ce qu'**au moins un évidement (16,116,216) est de section non-constante le long de ladite ligne centrale (18,118,218).

13. Aube (1) selon l'une quelconque des revendications 9 à 12, **caractérisée en ce qu'**elle est réalisée en titane dans l'un de ses alliages.
